Europäisches Patentamt

European Patent Office

Office européen des brevets

(11) Numéro de publication: **0 082 791**
**A1**

(12) ## DEMANDE DE BREVET EUROPEEN

(21) Numéro de dépôt: 82402356.8

(22) Date de dépôt: 22.12.82

(51) Int. Cl.³: **H 04 B 3/44**
**H 04 M 19/08**

(30) Priorité: 23.12.81 FR 8124064

(43) Date de publication de la demande:
29.06.83 Bulletin 83/26

(84) Etats contractants désignés:
AT BE CH DE FR GB IT LI LU NL SE

(71) Demandeur: JEUMONT-SCHNEIDER Société anonyme dite:
31-32, Quai de Dion Bouton
F-92811 Puteaux Cedex(FR)

(72) Inventeur: Picandet, Jean
12, rue du Docteur Paquelin
F-75020 Paris(FR)

(74) Mandataire: Lejet, Christian
Société JEUMONT-SCHNEIDER 31-32, Quai de Dion Bouton
F-92811 Puteaux Cedex(FR)

(54) **Dispositif de transmission de signaux sur une ligne assurant également une alimentation en tension continue.**

(57) Un dispositif de transmission entre un poste central (10) et un poste local (12) comprend une ligne (14) qui permet d'alimenter le poste (12) en tension continue à partir d'une source (20) dans le poste central (10). Un pont redresseur (51) est agencé de telle sorte que la polarisation convenable du récepteur (12) soit assurée quel que soit le sens de branchement des fils de la ligne (14). Des paquets d'impulsions de courant unipolaires sont superposées à cette tension d'alimentation sur la ligne (14) par deux générateurs (K₄₄, 40 et K₅₀, 46) dans le poste central et un générateur (K₁₀₂, 100) dans le poste local. La polarité respective des impulsions émises au poste central et au poste local est telle qu'elles puissent traverser un pont redresseur (55) dans le poste local (12).

FIG. 2

EP 0 082 791 A1

1

## Dispositif de transmission de signaux sur une ligne assurant également une alimentation en tension continue.

La présente invention concerne la transmission d'informations, notamment sous la forme de signaux numériques, entre un poste central et un poste local. Elle vise notamment les dispositifs dans lesquels la liaison entre ces postes s'effectue par une paire de conducteurs qui assurent à la fois l'alimentation sous une tension continue du poste local à partir du poste central en même temps que la transmission desdits signaux numériques.

Des installations fonctionnant sur ce principe, notamment pour la transmission bidirectionnelle d'informations entre un poste central et un poste local, sont courantes en téléphonie, notamment en téléphonie dite privée. Dans ces installations, les fonctions de poste central sont remplies par un auto-commutateur qui est relié à une multiplicité de postes locaux ou postes supplémentaires d'abonné par des lignes téléphoniques respectives.

Ces postes d'abonné nécessitent une alimentation électrique pour le fonctionnement du microphone et éventuellement celui des organes associés au poste téléphonique proprement dit. En général, elles ne comportent pas de source d'énergie autonome et leur alimentation est assurée directement par la polarisation de la ligne ou paire téléphonique à partir d'une source de tension unique dans l'auto-commutateur.

Il est fréquent en outre que les spécifications d'installation imposent que la polarisation correcte d'un poste local soit assurée à partir de la ligne téléphonique quel que soit le sens de branchement des conducteurs de cette dernière. A cet effet, un moyen de redressement, tel qu'un pont de diodes, est prévu en aval du point de connexion de ces conducteurs, en général dans le poste local, de façon à satisfaire à cette condition.

Afin d'obtenir des communications bidirectionnelles, la transmission de signaux codés s'effectue alternativement dans un sens et dans l'autre le long de la ligne par paquets d'impulsions représentant des binons. Ce dialogue est géré par des techniques appropriées de communication par canaux temporels, de façon à donner l'impression aux utilisateurs de simultanéité de la transmission dans les deux sens et à assurer, outre les fonctions de conversation habituelles, les fonctions de signalisation requises.

Les systèmes connus à cet effet mettent en oeuvre la transmission d'impulsions bipolaires, normalement symétriques, sur chacun des conducteurs de la ligne, en utilisant un code tel que la moyenne des niveaux d'un paquet d'impulsions successives sur chaque conducteur soit nulle. Ces impulsions sont injectées à l'entrée de chaque conducteur de la paire et détectées à la sortie à l'aide de transformateurs d'isolement respectifs. Les conducteurs de la ligne sont découplés l'un par rapport à l'autre à chacune de leurs extrémités par un condensateur interposé en un point milieu de l'enroulement connecté à la ligne de chaque transformateur. Au poste central, de part et d'autre de ce condensateur, est injectée la tension continue pour l'alimentation du poste local. Cette tension est prélevée aux bornes du condensateur de découplage inséré dans le transformateur d'entrée du poste local et transmise au pont de redresseurs permettant la polarisation correcte du poste quel que soit le sens de branchement des conducteurs de la paire. Le deuxième enroulement de chaque transformateur est également à point milieu et coopère avec

3    0082791

l'enroulement de la ligne pour l'émission et la réception
du code bipolaire alterné transmis par les signaux symétriques sur les deux conducteurs de la ligne.

En outre, une logique de commande est nécessaire pour transformer les binons d'informations à transmettre en un code
bipolaire à partir duquel est commandé un générateur de
tension débitant sur l'enroulement émetteur. Un décodeur
est également nécessaire en sortie de l'enroulement récepteur pour rétablir les signaux reçus dans leur forme numérique habituelle. Bien entendu, une telle installation est
nécessaire dans chaque poste local, et, dans le poste central, sur chaque port d'entrée d'une ligne en provenance
d'un poste local.

Ces dispositifs sont donc nombreux, complexes sur le plan
technique et coûteux; ils sont également encombrants et
lourds en raison des transformateurs qu'ils requièrent.

La présente invention a notamment pour but d'éliminer ces
inconvénients en assurant les fonctions de transmission de
signaux entre un poste central et un poste local sur une
ligne assurant la télé-alimentation de celui-ci d'une manière
plus simple et plus économique.

A cet effet, l'invention a notamment pour objet une installation de communication du type comprenant un poste central,
au moins un poste local, une ligne reliant ce poste central
et ce poste local et comportant une paire de conducteurs
pour assurer l'alimentation sous tension continue du poste
local à partir du poste central, au moins un moyen générateur, dans un de ces postes, pour injecter des signaux numériques sur la ligne d'alimentation et au moins un détecteur,
dans l'autre poste, pour détecter les signaux numériques
transmis par la ligne, caractérisée en ce que ce moyen générateur est propre à émettre des paquets d'impulsions unipolaires sur ladite ligne, ledit détecteur étant connecté à
cette ligne et agencé pour détecter les variations de polarité

4  0082791

de la ligne dans le sens des impulsions produites par ce générateur.

Les impulsions unipolaires transmises peuvent être ainsi la traduction directe des binons d'informations numériques à communiquer sans qu'il soit nécessaire de faire appel à des logiques de mise en oeuvre de codes bipolaires.

L'invention part de cette constatation qu'il est possible, sur le plan technique, de réaliser une transmission de signaux numériques sur une ligne télé-alimentante par injection directe d'impulsions unipolaires directement sur cette ligne. Dans les systèmes de l'art antérieur, l'utilisation de trains d'impulsions unipolaires était interdite du fait qu'ils contiennent une composante moyenne continue qui empêcherait le fonctionnement des transformateurs utilisés pour effectuer une telle superposition. Pour cette raison, on avait, comme on l'a exposé ci-avant, eu recours à un codage des signaux tendant à rendre leur composante moyenne nulle. Or, on a déterminé qu'il était possible de réaliser des montages sans transformateur qui permettent d'éviter ou de minimiser les effets de la composante continue de paquets d'impulsions transmis en superposition à une polarisation injectée sur une paire de conducteurs, cette transmission étant effectuée de préférence de façon symétrique sur chacun des conducteurs. A cet égard, l'invention s'applique de façon particulièrement favorable lorsque les informations transmises sont des paquets d'impulsions alternés à de brefs intervalles dans un sens et dans l'autre le long de la ligne, la polarité des paquets émis dans un sens étant opposée à celle des paquets émis dans l'autre sens. Les impulsions transmises dans chaque sens ont alors de préférence des amplitudes égales en valeur absolue

Par impulsions unipolaires, on entend ici des impulsions dont la polarité reste la même dans un train ou paquet d'impulsions successives qui se propage dans un sens donné le long de la ligne, cette polarité étant déterminée par rapport à la différence de potentiel nominale entre les conducteurs de cette ligne. On parle donc encore de transmission d'impulsions unipolaires sur la ligne dans le cas où celles-ci résultent de l'acheminement simultané d'impulsions opposées en phase sur chaque conducteur de la paire.

Selon un mode de réalisation, on prévoit une impédance, notamment une résistance, à l'extrémité de chaque conducteur de la ligne d'une part en amont du point d'injection des signaux transmis par le générateur dans le poste respectif, et d'autre part en aval du point de détection de ce dernier dans l'autre poste, la valeur de ces impédances étant déterminée pour optimiser les conditions de propagation des impulsions le long des conducteurs de la paire et pouvant être prise égale à la moitié de l'impédance caractéristique de la ligne à la fréquence de transmission des impulsions.

Il est avantageux de réaliser ces impédances à l'aide de thermistances dans le poste central afin de protéger ce dernier en cas de court-circuit sur la ligne.

Selon un mode préféré de réalisation de l'invention, on prévoit d'injecter sur la ligne des impulsions de courant dont il est aisé de contrôler les caractéristiques avec des moyens simples, notamment dans le but de garantir la symétrie des impulsions produites sur chaque conducteur. On préfère également détecter les impulsions reçues à l'autre extrémité de ligne à l'aide d'un amplificateur différentiel. Les entrées de celui-ci peuvent être polarisées par une tension visant à le soustraire aux effets de la composante continue des paquets d'impulsions polarisées dans le sens qu'il est appelé à détecter.

Les avantages de l'invention sont particulièrement sensibles dans le cas où un moyen de redressement est prévu pour assurer indifféremment la polarisation convenable du poste local. Afin d'assurer la transmission des impulsions unipolaires dans les deux sens à travers un tel moyen de redressement, il est prévu en effet que les moyens générateurs situés dans le poste central produisent des impulsions qui tendent à accroître la tension entre les conducteurs de la paire, tandis que les moyens générateurs situés au poste local tendent à diminuer cette même tension. Les trains d'impulsions unipolaires sont alors toujours transmis, quel que soit leur sens de propagation.

L'invention vise également un poste central, par exemple pour un auto-commutateur adapté à son utilisation dans une installation telle que celle qui vient d'être évoquée. Elle prévoit également un poste local, par exemple pour un poste supplémentaire d'abonné, adapté à cet effet.

Les explications et la description à titre d'exemple non limitatif qui suivent font référence aux dessins annexés, dans lesquels :

la figure 1 est un schéma général d'une installation à laquelle est applicable l'invention;

les figures 2 et 3 sont des schémas de circuits montrant les éléments de communication entre un poste central et un poste local respectivement pour la transmission d'informations du premier vers le deuxième, et vice versa;

la figure 4 est un schéma de circuits utilisables dans un poste central pour la mise en oeuvre de l'invention; et

la figure 5 est un schéma de circuits utilisables dans un poste local adapté à une installation mettant en oeuvre l'invention.

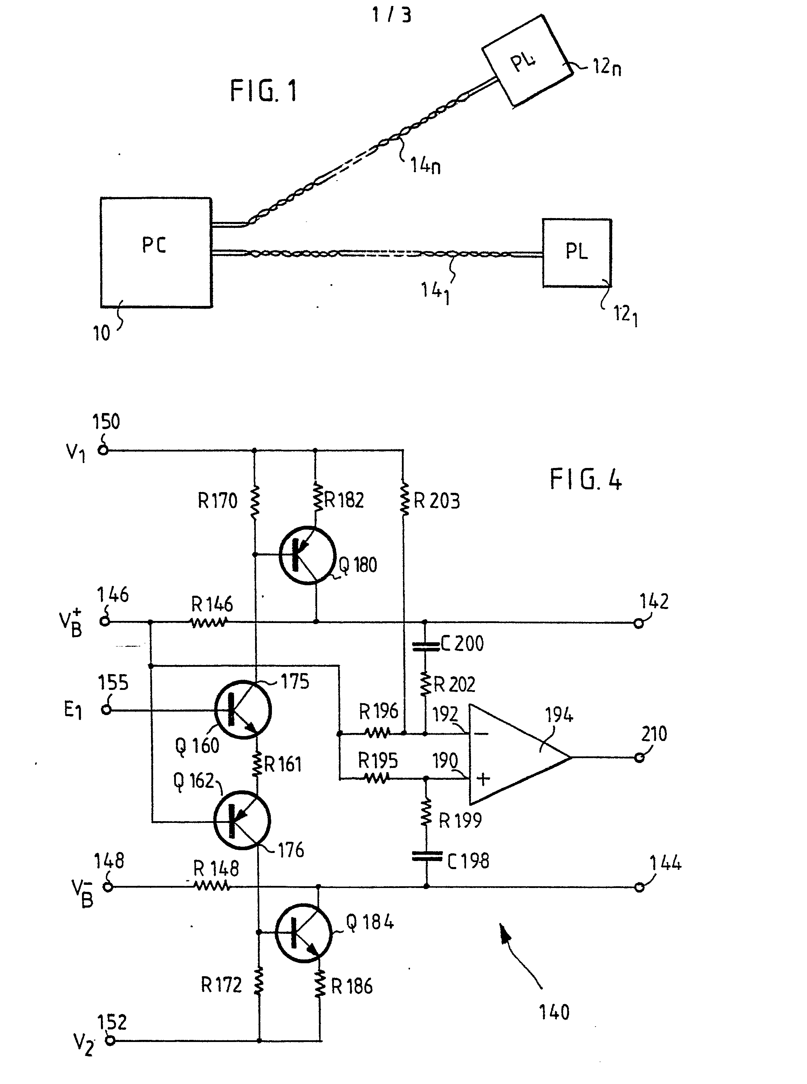

Une installation téléphonique (figure 1) comprend un poste central, ou auto-commutateur 10, qui est relié à un ensemble de postes locaux 12, respectivement $12_1$ à $12_n$, par des lignes téléphoniques 14, respectivement $14_1$ à $14_n$, comprenant chacune une paire de conducteurs comme il est habituel dans ce type d'installation.

L'auto-commutateur 10 réalise l'interconnexion entre les différents postes locaux entre eux d'une part et d'autre part avec un réseau téléphonique extérieur. Les postes locaux $12_1$ à $12_n$ peuvent consister non seulement en un simple poste téléphonique pour les communications vocales mais peuvent en fait constituer chacun une régie d'abonné comportant, outre le poste d'émission-réception phonique habituel, des équipements périphériques propres à la visualisation d'informations et à la transmission numérique de données directement sur un clavier. Dans une telle installation, comme il est courant, les transmissions sur les lignes $14_1$ à $14_n$ se font de manière entièrement numérique et dans les deux sens. Ceci est vrai non seulement pour les signaux phoniques qui sont convertis en signaux numériques, mais également pour tous signaux de signalisation adaptés à la réalisation de fonctions d'appel, à l'affichage lumineux de signaux particuliers et éventuellement l'enregistrement de données de taxation.

Outre ces fonctions de transmission, les lignes $14_1$ à $14_n$ assurent l'alimentation de chacun des postes locaux $12_1$ à $12_n$ en tension continue à partir du poste central 10.

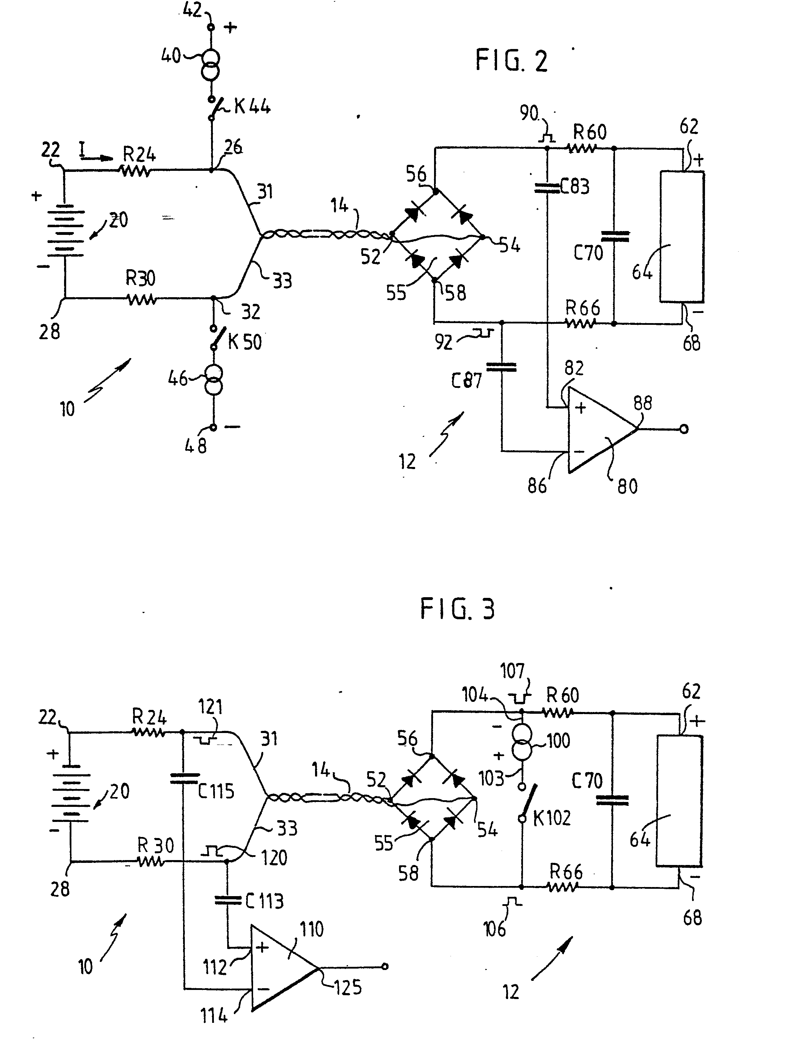

A cet effet, le poste central ou unité centrale 10 (figures 2 et 3) comprend une source de tension continue 20 dont la valeur peut s'élever par exemple à une quarantaine de volts, dont le pôle positif 22 est connecté à travers une résistance $R_{24}$ à une jonction 26 pour l'injection de signaux sur un premier conducteur 31 de la ligne 14. De même, le pôle négatif 28 de la source 20 est relié par l'intermédiaire d'une résistance $R_{30}$ à une jonction 32 pour l'injection de signaux sur un deuxième conducteur 33 de la ligne 14.

Un générateur de courant constant 40 est connecté entre une borne 42 alimentée par une tension plus positive que celle du pôle 22 et une porte analogique $K_{44}$ qui, dans sa condition passante, le relie à la borne d'injection 26. Cette porte est placée sous la commande d'un dispositif d'émission non représenté. De la même façon, un générateur de courant constant 46 est branché entre une borne 48 alimentée par une tension plus négative que celle du pôle 28 de la source 20 et la jonction 32 par l'intermédiaire d'une porte analogique $K_{50}$ sous la commande du dispositif d'émission déjà mentionné.

Les conducteurs 31 et 33 de la paire 14 qu'on a représentés schématiquement sous une forme torsadée sur la figure 2 aboutissent chacun à une des jonctions d'entrée 52 et 54 d'un pont redresseur à diodes 55 à l'entrée du poste local 12. Une sortie 56 du pont 55 est reliée à travers une résistance $R_{60}$ à une borne d'entrée 62 d'un convertisseur 64, par exemple la borne positive. La sortie 58 du pont 55 est connectée à travers une résistance $R_{66}$ à l'autre borne d'entrée (négative) 68 du convertisseur 64. Ce convertisseur 64 fournit localement les différentes tensions nécessaires au fonctionnement du poste local 12, telles que notamment l'alimentation du microphone et des éventuels organes auxiliaires au poste téléphonique proprement dit. Entre les bornes 62 et 68 du convertisseur 64 est connecté un condensateur $C_{70}$, de manière à constituer, avec les résistances $R_{60}$ et $R_{66}$ un filtre passe-bas interdisant aux impulsions d'atteindre le convertisseur 64.

Les bornes de sortie 56 et 58 du pont redresseur 55 sont polarisées constamment dans le même sens, quel que soit le sens de branchement des conducteurs 31 et 33 de la paire 14 avec les entrées 52 et 54. Ainsi, la ligne 14 réalise une télé-alimentation du poste local 12 avec la polarité nécessaire au fonctionnement du convertisseur 64, sans qu'un marquage des conducteurs 31 et 33 soit nécessaire pour effectuer le branchement dans le sens convenable.

Pour la détection des signaux impulsionnels transmis par le poste central 10 vers le poste local 12, un amplificateur différentiel 80 de sortie 88 a son entrée positive 82 connectée à la sortie 56 du pont 55 par un condensateur $C_{83}$. L'entrée négative 86 de l'amplificateur 80 est reliée à la sortie 58 du pont 55 par un condensateur $C_{87}$.

Les circuits sur chaque conducteur de la paire sont réalisés d'une manière symétrique. En particulier, les valeurs des résistances $R_{24}$ et $R_{30}$ sont égales entre elles et chacune égale à la moitié de l'impédance caractéristique de la ligne 14 à la fréquence de transmission des impulsions numériques entre les postes 10 et 12. Les résistances $R_{60}$ et $R_{66}$ sont également égales entre elles et à cette valeur. Les capacités des condensateurs $C_{83}$ et $C_{87}$ sont identiques. Les amplitudes des courants émis par les générateurs de courant 40 et 46 sont les mêmes.

Ainsi, en fonctionnement, lorsque le dispositif d'émission de messages du poste central 10 vers le poste local 12 est excité pour la transmission d'une série de binons, les portes analogiques $K_{44}$ et $K_{50}$ sont fermées simultanément pendant la durée de chaque binon de valeur logique 1 et restent ouvertes dans le cas contraire, de façon à créer un train d'impulsions de courant unipolaires qui se propage le long de la ligne 14. Chacune de ces impulsions est composée de deux créneaux de courant simultanés, de même amplitude et opposés en phase, respectivement sur les conducteurs 31 et 33. Ainsi se trouve évitée l'émission de rayonnements par la ligne sous l'effet de la propagation des impulsions. En outre, du fait de sa construction symétrique, l'installation n'est pas sensible à la présence de rayonnements extérieurs.

Les créneaux de courant produits à chaque fermeture des portes analogiques $K_{44}$ et $K_{50}$ se superposent sur la ligne 14 à la polarisation de télé-alimentation et leur sens est tel qu'ils tendent à augmenter cette tension de télé-alimentation. En conséquence, ils sont transmis sans difficulté par le pont de diodes 55. Grâce au condensateur de découplage $C_{70}$, les créneaux de tension unipolaires ainsi produits n'affectent pratiquement pas le convertisseur 64. En revanche, ils sont transmis par les condensateurs $C_{83}$ et $C_{87}$, qui assurent le blocage de la composante continue de télé-alimentation présente aux sorties 56 et 58. La polarité des créneaux de tension qui viennent d'être évoqués et que l'on a représentés schématiquement sur la figure 2 sous les signes de référence 90 et 92 tend à créer un écart de tension entre les entrées 82 et 86 de l'amplificateur différentiel 80 tel qu'une impulsion logique positive apparaisse sur sa sortie 88 à partir de son niveau de repos. Les signaux numériques constitués par les variations de niveau de la sortie sous l'effet des impulsions ainsi détectées par l'amplificateur 80 sont traités en fonction de l'information qu'elles transmettent au poste local 12 par des circuits de décodage appropriés.

L'installation des figures 2 et 3 est adaptée à la transmission bidirectionnelle de messages entre les postes central 10 et local 12. A cet effet, le poste 12 comprend également des moyens émetteurs pour produire des paquets d'impulsions unipolaires qui sont transmises par la ligne 14 au poste central 10, ce dernier étant équipé pour détecter ces impulsions. Comme habituel dans la transmission par canaux temporels, les systèmes de gestion du poste central 10 et du poste local 12 sont organisés pour faire alterner la transmission des paquets d'impulsions dans un sens et dans l'autre, le long de la ligne téléphonique 14. Ainsi, à chaque paquet transmis dans un sens succède une période de repos suivie de la transmission d'un paquet dans l'autre sens.

Pour la clarté des explications, sur la figure 3 on a éliminé les moyens décrits en référence à la figure 2 et assurant la transmission du poste central vers le poste local. En revanche, on a représenté les moyens permettant la transmission en sens inverse. Entre les bornes 56 et 58 du pont 55 est branché un montage en série formé d'un générateur de courant constant 100 suivi d'une porte analogique $K_{102}$ dont la fermeture est commandée sous l'action du dispositif d'émission,

non représenté, du poste local 12. Le générateur 100 est branché, comme représenté par les désignations + et – à ses bornes 103 et 104, pour produire un courant à travers la porte analogique $K_{102}$ lorsque celle-ci est fermée dans le sens allant de la borne 56 à la borne 58 et dont l'amplitude est de préférence égale à celle des courants des générateurs 40 et 46. Autrement dit, ce générateur agit comme une charge vis-à-vis du pont redresseur 55 en aval duquel il est placé, si l'on considère le sens de télé-alimentation. On a désigné par des références 106 et 107 les créneaux de tension correspondant à chaque séquence de fermeture-ouverture de la porte analogique $K_{102}$. Ces crénaux, qui agissent dans le sens d'une diminution temporaire de la tension entre les bornes 56 et 58, sont d'amplitudes égales et opposées en phase, et peuvent donc se propager à travers le pont 55 sur les conducteurs respectifs de la ligne 14 symétriquement en direction du poste central 10. En raison du condensateur de découplage $C_{70}$, ils restent pratiquement sans influence sur le convertisseur 64. En outre, ils agissent sur l'amplificateur de détection 80 du poste local 12 dans un sens qui maintient la sortie 88 de ce dernier au niveau logique nul.

Les trains d'impulsions unipolaires en provenance de l'émetteur du poste local 12 sont détectés dans le poste central 10 par un amplificateur différentiel 110 dont une entrée positive 112 est connectée à travers un condensateur C 113 au conducteur 33 de la paire, entre la ligne 14 et la résistance $R_{30}$, et dont l'entrée négative 114 est connectée à travers un condensateur $C_{115}$ au conducteur 31, entre la ligne 14 et la résistance $R_{24}$. Les créneaux que l'on a schématiquement représentés par les formes d'ondes 120 et 121 à l'entrée des condensateurs $C_{113}$ et $C_{115}$, agissent différentiellement dans le sens d'une augmentation de la tension entre les entrées 112 et 114. Un signal logique de niveau 1 apparaît en conséquence sur la sortie 125 de l'amplificateur 110, en réponse à chacune des impulsions correspondantes. Au contraire, (figure 2), les impulsions émises par les générateurs de courant 40 et 46 pendant les périodes de transmission du poste central vers le poste local agissent dans un sens qui tend à maintenir la sortie 125 de l'amplificateur 110 au niveau logique nul.

Ainsi, les amplificateurs 80 et 110 permettent d'effectuer la détection unidirectionnelle des paquets d'impulsions transmis le long des conducteurs de la ligne 14, en éliminant d'éventuelles perturbations du mode commun qui peuvent apparaître sur les deux conducteurs de la ligne. Il est possible en outre de polariser les entrées de chacun de ces amplificateurs différentiels 80 et 110 afin de créer entre elles un décalage de tension qui les rende insensibles à la composante continue moyenne engendrée par chaque paquet d'impulsions pendant la durée de celui-ci et à obtenir ainsi une coupure certaine et franche de leur signal de sortie en réponse à chacune des impulsions dans le sens qu'ils sont appelés à détecter, pendant toute la durée de chaque train respectif. Cette composante moyenne est minimisée du fait du temps de repos et de l'émission du paquet unipolaire suivant, en sens inverse le long de la ligne et avec une polarité inverse.

Grâce aux résistances $R_{24}$ et $R_{30}$ au poste central, et $R_{60}$ et $R_{66}$ au poste local, et notamment par une sélection convenable de leurs valeurs par rapport à l'impédance de la ligne, les impulsions transmises par la ligne sont absorbées dans chaque poste par ces résistances sans provoquer de réémission d'échos préjudiciables à la propagation fiable des informations sur la ligne. Cette adaptation permet ainsi de créer des conditions favorables à l'acheminement direct des signaux numériques unipolaires par superposition à une tension continue d'alimentation sur une ligne commune. On peut en outre avantageusement prévoir les résistances $R_{24}$ et $R_{30}$ sous la forme de thermistances à coefficient de température positif afin de limiter le courant en cas de court-circuit entre les conducteurs 31 et 33 de la ligne 14.

Les portes logiques $K_{44}$, $K_{50}$ et $K_{102}$ sont normalement ouvertes et leur fermeture provoque l'apparition d'impulsions
de courant symétriques le long de la ligne 14 dans un sens
imposé pour permettre le franchissement du pont de diodes 55.

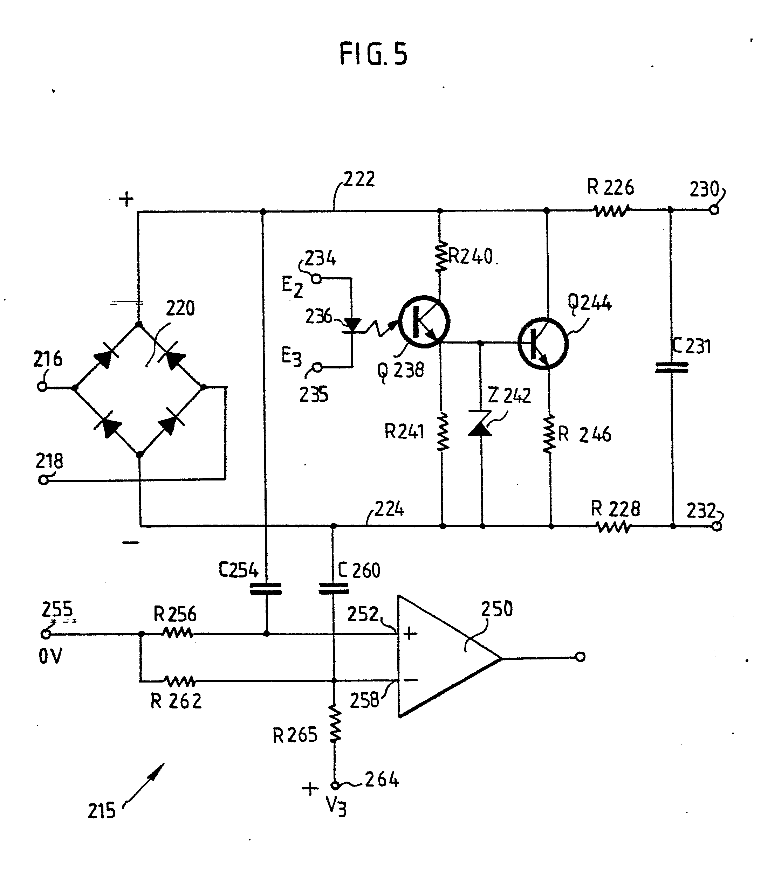

Dans un exemple de réalisation d'un module 140 (fig. 4) reliant
un poste central à une ligne téléphonique raccordée à des
bornes 142 et 144, deux résistances $R_{146}$ et $R_{148}$ identiques
aux résistances $R_{24}$ et $R_{30}$ sont prévues, respectivement,
d'une part, entre la borne 142 et une borne 146 de connexion
au pôle positif $V_{B+}$ d'une source de courant continu et,
d'autre part, entre la borne 144 et une borne 148 de raccordement du module au pôle négatif ($V_{B-}$) de cette source. Le
module comprend une borne 150 de raccordement à un pôle
d'une source de tension $V_1$ supérieure de quelques volts
(niveau logique) à la tension $V_{B+}$, et une borne 152 de raccordement à une source de tension $V_2$ inférieure d'un nombre
sensiblement égal de volts à la tension $V_{B-}$. Enfin, le module
possède une entrée 155 propre à être connectée à un émetteur
$E_1$ qui commande la base d'un transistor NPN $Q_{160}$ dont l'émetteur est relié par une résistance $R_{161}$ à l'émetteur d'un
transistor PNP $Q_{162}$ dont la base est polarisée par la tension
$V_{B+}$. Le collecteur du transistor $Q_{160}$ est relié par une résistance $R_{170}$ à la borne 150 et le collecteur du transistor
$Q_{162}$ est relié à la borne 152 par une résistance $R_{172}$, les
résistances $R_{170}$ et $R_{171}$ ayant la même valeur. Le collecteur
175 du transistor $Q_{160}$ commande la base d'un transistor
PNP $Q_{180}$ dont le collecteur est relié à la borne de ligne
142 et l'émetteur à la borne 150 par une résistance $R_{182}$.
Le collecteur 176 du transistor $Q_{162}$ commande la base d'un
transistor NPN $Q_{184}$ dont le collecteur est relié à la borne
de ligne 144 et l'émetteur à la borne 152 à travers une
résistance $R_{186}$. Les résistances $R_{182}$ et $R_{186}$ sont égales.
Lorsque le potentiel de la borne 155 ($E_1$) est égal à $V_{B+}$,
pratiquement aucun courant ne circule dans les transistors
$Q_{160}$, $Q_{162}$, $Q_{180}$ et $Q_{184}$. Lorsqu'un créneau de tension supérieure à $V_{B+}$ est appliqué à la borne 155, le transistor $Q_{160}$
se débloque et un courant circule entre les bornes 150 et 152 à travers les résistances $R_{170}$, $R_{161}$, $R_{172}$ et, les transistors $Q_{160}$ et $Q_{162}$ ayant un gain relativement élevé, un même courant circule dans ces trois résistances. Dans ces conditions, les tensions de base des transistors $Q_{180}$ et $Q_{184}$ étant égales, ces derniers injectent vers les bornes de lignes 142 et 144 respectivement des courants sensiblement égaux et de polarités opposées.

La borne d'alimentation 146 ($V_{B+}$) est également connectée aux entrées positive 190 et négative 192 d'un amplificateur différentiel 194 à travers deux résistances respectivement $R_{195}$ et $R_{196}$. En outre, l'entrée 190 est reliée à la borne de ligne 144 à travers un condensateur $C_{198}$ et une résistance $R_{199}$. De même, l'entrée négative 192 de l'amplificateur 194 est reliée à la borne de ligne 142 par un condensateur $C_{200}$ et une résistance $R_{202}$ connectés en série. Enfin, cette entrée négative 192 est également reliée à la borne 150 (tension $V_1$) par une résistance $R_{203}$ qui forme avec la résistance $R_{196}$ un diviseur de tension permettant de maintenir la tension de l'entrée négative 192 de l'amplificateur 194 à un niveau intermédiaire entre $V_{B+}$ et $V_1$. La valeur de la résistance résultant de la mise en parallèle des résistances $R_{196}$ et $R_{203}$ est égale à la valeur de la résistance $R_{195}$ pour raison de symétrie.

Ainsi, les impulsions de courant produites aux bornes 142 et 144 par les transistors $Q_{180}$ et $Q_{184}$ ne modifient pas le niveau de la sortie 210 de l'amplificateur 194, lequel reste à zéro. En revanche, si des impulsions symétriques sont reçues aux bornes 142 et 144 dans un sens qui tend à réduire la tension existant entre elles, les signaux différentiels transmis par les condensateurs $C_{198}$ et $C_{200}$ peuvent avoir une amplitude suffisante, eu égard à la polarisation créée par le diviseur $R_{203}$, $R_{196}$, pour que la tension entre les entrées 190 et 192 de l'amplificateur 194 devienne positive et qu'une impulsion correspondante apparaisse à la sortie 210 de celui-ci. Le niveau de polarisation positive imposé à l'entrée 192 par le diviseur de tension $R_{203}$, $R_{196}$ est choisi de façon à éviter que, par le jeu de leur composante continue sur chaque
conducteur de la ligne, les impulsions unipolaires ne
puissent agir sur l'amplificateur 194.

La partie réception 215 d'un poste local est représentée à
la figure 5. Elle comprend deux bornes 216 et 218 propres
à être connectées à une ligne ou paire téléphonique qui alimente à travers un pont à diodes 220 deux conducteurs 222
et 224 dans lesquels sont connectées en série deux résistances $R_{226}$ et $R_{228}$ analogues aux résistances $R_{60}$ et $R_{66}$
(figure 2) entre les extrémités 230 et 232 desquelles peut
être connecté le convertisseur d'alimentation du poste local
et un condensateur de découplage $C_{231}$ en parallèle.

Les signaux de commande pour l'émission d'impulsions sont
appliqués aux bornes 234 et 235 d'une diode électroluminescente 236 disposée vis-à-vis d'un transistor photosensible
$Q_{238}$ dont le collecteur et l'émetteur sont respectivement
reliés aux lignes 222 (sortie positive du redresseur 220)
et 224 (sortie négative du redresseur) par l'intermédiaire
de résistances $R_{240}$ et $R_{241}$. Une diode Zener $Z_{242}$, montée en
parallèle à la résistance 241, fixe la tension de la base
d'un transistor $Q_{244}$ à un niveau déterminé chaque fois que
le transistor photosensible $Q_{238}$ est rendu conducteur par
une impulsion lumineuse. Le transistor $Q_{244}$, dont l'émetteur
est chargé par une résistance $R_{246}$, est monté entre les conducteurs 222 et 224 de façon à drainer un courant d'intensité
prédéterminée entre eux pendant la durée de chacune des
impulsions lumineuses.

Pour la détection des impulsions de courant transmises par
le pont 220 à partir des bornes de ligne 216 et 218, un
amplificateur différentiel 250 a son entrée positive 252
couplée à la ligne 222, à travers un condensateur $C_{254}$, et
à une borne 255 de tension de référence, de 0 volt par une
résistance $R_{256}$. L'entrée négative 258 de l'amplificateur
250 est reliée à la ligne 224 par un condensateur $C_{260}$, à
la borne de référence 255 par une résistance $R_{262}$ et à une

borne de potentiel positif 264 par une résistance $R_{265}$. La valeur de la résistance résultant de la mise en parallèle des résistances $R_{262}$ et $R_{265}$ est égale à la valeur de $R_{256}$ pour raison de symétrie. Les résistances $R_{265}$ et $R_{262}$ forment donc un diviseur de potentiel grâce auquel une tension de décalage est introduite entre les entrées 252 et 258 de l'amplificateur 250 pour le rendre insensible à la composante continue des trains d'impulsions qui franchissent le pont de diodes 220 en provenance du poste central.

On dispose ainsi d'un système de communication entre des postes, notamment dans une installation téléphonique, reliés par une ligne assurant à la fois l'alimentation et la transmission d'informations numériques dans les deux sens sur celle-ci, qui ne comporte que des éléments électroniques relativement simples et bon marché, et ne fait pas appel à des transformateurs ni à des logiques complexes d'interface pour l'injection et l'extraction des signaux transmis sur la ligne. L'ensemble peut donc être réalisé avec des moyens économiques et miniaturisés, ce dernier point représentant une caractéristique particulièrement avantageuse avec les technologies modernes de réalisation de microcircuits.

Bien que seul le mode préféré de réalisation de l'invention ait été décrit, il est évident que toute modification apportée par l'Homme de l'Art dans le même esprit ne sortirait pas du cadre de la présente invention.

Notamment, on sait que les communications en alternat ou simplex, telles qu'il vient d'être décrit entre un poste central et un poste local sont limitées par la longueur de la ligne reliant les deux postes du fait du temps de propagation nécessaire pour acheminer un premier paquet de binons dans un sens, puis un second dans l'autre. A partir d'une longueur déterminée de la ligne, il est nécessaire d'assurer les communications en simultanéité ou duplex. Dans ce cas, un circuit anti-local, notamment auto-adaptatif du type annuleur d'écho peut être avantageusement ajouté dans le module de liaison de chacun des postes à la ligne téléphonique.

Revendications.

1. Installation de communication du type comprenant un poste central (10), au moins un poste local (12), une ligne (14) reliant ce poste central et ce poste local et comportant une paire de conducteurs pour assurer l'alimentation sous tension continue du poste local à partir du poste central, au moins un moyen générateur (40, $K_{44}$) dans un de ces postes pour injecter des signaux numériques sur la ligne d'alimentation (14) et au moins un détecteur (80) dans l'autre poste pour détecter les signaux numériques transmis par la ligne, caractérisée en ce que ce moyen générateur (40, $K_{44}$) est propre à émettre des paquets d'impulsions unipolaires sur ladite ligne (14), ledit détecteur (80) étant connecté à cette ligne et agencé pour détecter les variations de tension dans la ligne dans le sens des impulsions produites par ce générateur.

2. Installation selon la revendication 1, équipée notamment pour la transmission de paquets d'impulsions dans un sens et dans l'autre le long de la ligne, caractérisée en ce que le poste central (10) comprend un tel moyen générateur ($K_{44}$, 40) pour émettre des paquets d'impulsions unipolaires vers le poste local (12), tendant à modifier dans un premier sens la tension entre les conducteurs de ladite ligne, et le poste local (12) comprend un tel moyen générateur ($K_{102}$, 100) pour émettre des paquets d'impulsions unipolaires vers le poste central, tendant à modifier ladite tension dans un second sens opposé au premier, chacun de ces postes comprenant en outre un tel moyen détecteur respectif (80, 110) branché pour rester insensible aux impulsions produites par les moyens générateurs installés dans le même poste.

3. Installation selon l'une des revendications 1 ou 2, caractérisée en ce qu'elle comprend un moyen de redressement (55) sur ladite ligne permettant d'assurer la polarisation d'un circuit d'alimentation du poste local dans un sens déterminé à l'avance, quel que soit le sens de branchement de la paire de conducteurs entre le poste central et le poste local, et que le sens de la modification de la tension entre les conducteurs de ladite ligne lors d'émission d'impulsions unipolaires produites par ledit moyen générateur est différent selon que ce générateur est dans le poste central (10) ou dans le poste local (12) et est déterminé par le sens de circulation du courant imposé par ledit moyen de redressement.

4. Installation selon l'une des revendications 1 à 3, caractérisé en ce que lesdits signaux numériques sont transmis sous forme d'impulsions électriques d'amplitudes égales et de phases opposées sur chacun des conducteurs de ladite paire (14).

5. Installation selon l'une des revendications 1 à 4, caractérisée en ce que lesdites impulsions sont des impulsions de courant directement injectées à un noeud de connexion (26) sur chacun des conducteurs de la ligne.

6. Installation selon l'une des revendications 1 à 5, caractérisée en ce que le ou chaque détecteur comprend un amplificateur différentiel (80) dont chaque entrée est connectée à un conducteur respectif de ladite ligne à travers un condensateur de blocage de la composante continue ($C_{83}$, $C_{87}$).

7. Installation selon la revendication 6, caractérisée en ce que les entrées (252, 258) dudit amplificateur différentiel sont polarisées par une tension de sens inverse à la polarité des impulsions transmises sur cette ligne à un niveau supérieur à la composante moyenne continue de chaque paquet d'impulsions transmis dans un même sens sur cette ligne et inférieur à l'amplitude de crête de ces impulsions.

8. Installation selon l'une des revendications précédentes, caractérisée en ce que chaque conducteur est connecté en série avec une première impédance ($R_{24}$, $R_{30}$) en amont du point d'application des impulsions, dans le poste respectif, par rapport à leur sens de propagation sur la ligne et avec une

deuxième impédance ($R_{60}$, $R_{66}$) en aval du point de détection desdites impulsions par rapport à leur sens de propagation sur la ligne, dans le poste respectif.

9. Installation selon la revendication 8, caractérisée en ce que lesdites impédances sont des résistances dont les valeurs sont sensiblement égales à la moitié de l'impédance caractéristique de ladite ligne.

10. Installation selon l'une des revendications 8 ou 9, caractérisée en ce que lesdites impédances montées dans le poste central sont des thermistances à coefficient de température positif.

11. Poste central, notamment pour auto-commutateur d'installation téléphonique propre à centraliser les communications d'une pluralité de postes locaux tels que des postes supplémentaires d'abonné, comprenant une première et une deuxième borne (142, 144) de raccordement aux conducteurs d'une ligne téléphonique destinée à relier ce poste central à un poste local, caractérisé en ce qu'il comprend des moyens (146,148) pour la connexion d'une source de tension afin d'établir une tension continue d'alimentation entre ces bornes de raccordement, une première et une deuxième impédance ($R_{146}$, $R_{148}$) entre ces moyens de connexion et cette première et cette deuxième borne de raccordement respectivement, un premier et un deuxième générateur d'impulsions unipolaires ($Q_{180}$, $Q_{184}$) respectivement raccordés à la première et à la deuxième borne et prévus pour être placés conjointement sous la commande d'un dispositif émetteur commun (155) pour transmettre vers ces deux bornes de raccordement, en aval desdites première et deuxième impédances, des impulsions symétriques unipolaires tendant à accroître la tension d'alimentation, et un détecteur (194) d'impulsions unipolaires symétriques reçues sur ces bornes de raccordement et polarisées dans un sens qui s'oppose à la tension continue d'alimentation de ces dernières.

12. Poste local, notamment poste supplémentaire d'abonné dans une installation téléphonique, propre à être relié à un poste central par une paire de conducteurs assurant l'alimentation de ce poste en tension continue et destinée à être raccordée à un moyen de redressement (220) propre à fournir, entre une première et une deuxième borne (222, 224), dans ce poste, une polarisation dont le sens soit indépendant du sens de branchement des deux conducteurs de la paire, caractérisé en ce qu'il comprend des moyens de branchement (230, 232) d'un convertisseur propre à être alimenté à partir de cette première et de cette deuxième borne, une première et une deuxième impédance ($R_{226}$, $R_{228}$) respectivement entre la première et la deuxième borne et lesdits moyens de branchement, un générateur d'impulsions ($Q_{224}$) connecté entre cette première et cette deuxième borne (222, 224) pour produire, sous la commande d'un dispositif émetteur (236), des impulsions électriques respectives symétriques sur ces bornes tendant à réduire la tension d'alimentation, et un détecteur (250) d'impulsions unipolaires reçues sur lesdites première et deuxième bornes dans un sens qui tend à accroître la tension d'alimentation.

FIG. 1

FIG. 4

FIG. 2

FIG. 3

JEUMONT_SCHNEIDER

# FIG.5

JEUMONT SCHNEIDER.

Office européen
des brevets

RAPPORT DE RECHERCHE EUROPEENNE

**0082791**
Numéro de la demande

EP 82 40 2356

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | GB-A-1 437 032 (PLESSEY) <br><br> * Page 1, lignes 32-65; page 2, lignes 13-100, page 3, lignes 110-121 * | 1,2,4, 6-9,11 ,12 | H 04 B 3/44 <br> H 04 M 19/08 |
| X | GB-A-1 542 629 (PLESSEY) <br><br> * Page 1, lignes 43-87; page 2, lignes 12-115; page 4, lignes 29-41 * | 1,2,4, 6-9,11 ,12 | |
| A | GB-A-2 002 996 (THE POST OFFICE) <br> * Page 1, ligne 79 - page 2, ligne 106 * | 1,3 | |
| A | GB-A-1 360 605 (PLESSEY) <br> * Page 1, lignes 48-65 * | 1,5 | |
| A | FR-A-1 409 623 (PHILIPS) <br> * Page 2, colonne de droite, ligne 13 - page 3, colonne de droite, ligne 11 * | 1,10 | |
| A | FR-A-2 412 994 (INTERNATIONAL STANDARD ELECTRIC) <br> * Page 1, ligne 18 - page 2, ligne 8; page 11, lignes 6-26 * <br><br> ---     -/- | 1 | |

**DOMAINES TECHNIQUES RECHERCHES (Int. Cl. 3)**

H 04 B 3/44
H 04 B 3/54
H 04 M 19/08
H 04 L 5/16
H 04 L 25/02
H 04 L 5/20
H 04 Q 1/38

Le présent rapport de recherche a été établi pour toutes les revendications

| Lieu de la recherche <br> LA HAYE | Date d'achèvement de la recherche <br> 29-03-1983 | Examinateur <br> VERSLYPE J.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

## RAPPORT DE RECHERCHE EUROPEENNE

**0082791**
Numéro de la demande

Office européen
des brevets

EP 82 40 2356

### DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 456 349 (SOCIETE D'INFORMATIQUE ET DE TELETRANSMISSIONS SITINTEL) * Page 3, ligne 1 - page 5, ligne 35 * | 1 | |
| | ----- | | |
| | | | **DOMAINES TECHNIQUES RECHERCHES (Int. Cl. 3)** |

Le présent rapport de recherche a été établi pour toutes les revendications

| Lieu de la recherche | Date d'achèvement de la recherche | Examinateur |
|---|---|---|
| LA HAYE | 29-03-1983 | VERSLYPE J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82